# EUROPEAN PATENT APPLICATION

(11) **EP 4 201 758 A1**
(43) Date of publication of application: **28.06.2023**
(21) Application number: 21859715.1
(22) Date of filing: 21.05.2021
(51) Int. Cl.: B60S 5/06

(54) **BATTERY CONVEYING SYSTEM, BATTERY SWAPPING STATION, AND BATTERY SWAPPING METHOD**

(30) Priority: 24.08.2020 CN 202010868352
(71) Applicant: Nio Technology (Anhui) Co., Ltd, Hefei City, Anhui 230601 (CN)
(72) Inventor: LI, Yongjie, Shanghai 201804 (CN); ZHANG, Ning, Shanghai 201804 (CN); ZHENG, Lang, Shanghai 201804 (CN); CAO, Jia, Shanghai 201804 (CN)
(74) Representative: Vossius & Partner Patentanwälte Rechtsanwälte mbB
(86) International application number: PCT/CN2021/095152
(87) International publication number: WO 2022/041870

(57) **Abstract**

The disclosure provides a battery conveying system, a battery swapping station, and a battery swapping method. The battery conveying system includes a first conveying mechanism and a second conveying mechanism. When the first conveying system and the second conveying system are located at a docking position, a first support structure of the first conveying system is perpendicularly aligned with a channel structure of the second conveying system, such that when the first support structure of the first conveying system is being lifted or lowered relative to a mechanism body, the first support structure can run through the channel structure, such that a support surface of the first support structure is higher or lower than a support surface of the second support structure in a horizontal direction, so as to allow a battery to be transported between the first conveying system and the second conveying system. In this way, the disclosure can reduce or eliminate a transportation area between the first conveying mechanism and the second conveying mechanism, thus satisfying developmental requirements for miniaturization of the battery swapping station.

## Description

### Technical Field

The disclosure relates to a vehicle battery swapping technology, and more particularly to a battery conveying system, a battery swapping station and a battery swapping method.

### Background Art

With the development of vehicle technology, new energy vehicles have become the mainstream development trend of automobile industry. A battery swapping station is equipment for swapping a battery for an electric vehicle.

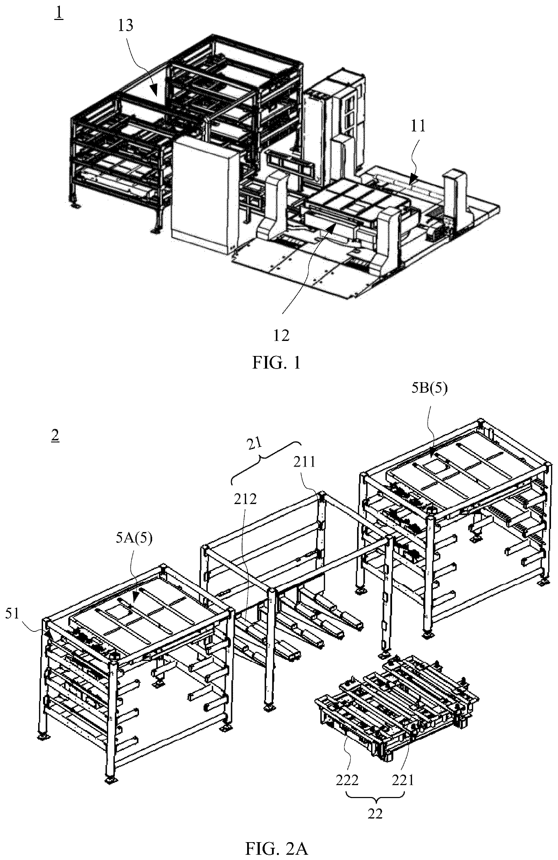

As shown in Fig. 1, a conventional battery swapping station 1 is mainly composed of a battery swapping platform 11, a rail guided vehicle (RGV) 12 and a battery storage mechanism 13. The battery swapping platform 11 is configured to park and position a vehicle, and the battery storage mechanism 13 is configured to enable storage, transfer and charging operations of batteries. The rail guided vehicle 12 is further configured to convey a battery between the battery swapping platform 11 and the battery storage mechanism 13 in addition to enabling operations such as locking and unlocking of the battery.

During battery swapping, the rail guided vehicle 12 needs to exit the battery swapping platform 11 and then be docked with the battery storage mechanism 13 for transporting the battery, so that it is necessary to leave enough space in a conventional battery swapping station 1 to perform a battery transportation operation between the battery swapping platform 11 and the battery storage mechanism 13, resulting in a large overall footprint of the conventional battery swapping station 1, which is not only unfavorable for site selection for equipment in the battery swapping station, but also increases the overall cost of the equipment.

### Summary of the Disclosure

In view of the above-mentioned problems, the disclosure provides a battery conveying system, a battery swapping station and a battery swapping method in order to solve or at least partially solve the above-mentioned problems.

A first aspect of the disclosure provides a battery conveying system, including a first conveying mechanism and a second conveying mechanism. The first conveying mechanism includes a mechanism body; and a first support structure movably arranged on the mechanism body and liftable relative to the mechanism body, the first support structure supporting a battery. The second conveying mechanism includes a second support structure configured to support the battery; and a channel structure formed on the second support structure. When the first conveying mechanism and the second conveying mechanism are located at a docking position, the first support structure is perpendicularly aligned with the channel structure to enable, when the first support structure is being lifted or lowered relative to the mechanism body, the first support structure to run through the channel structure, such that a support surface of the first support structure is higher or lower than a support surface of the second support structure in a horizontal direction, so as to allow the battery to be transported between the first support structure and the second support structure.

Optionally, the battery is supported on the support surface of the first support structure or the support surface of the second support structure. The battery supported on the support surface of the second support structure is transferable to the support surface of the first support structure when the support surface of the first support structure is being lifted from a position lower than the support surface of the second support structure to a position higher than the support surface of the second support structure; and the battery supported on the support surface of the first support structure is transferable to the support surface of the second support structure when the support surface of the first support structure is being lowered from a position higher than the support surface of the second support structure to a position lower than the support surface of the second support structure.

Optionally, the first support structure includes a plurality of first support members arranged in the shape of a comb, the second support structure includes a plurality of second support members arranged in the shape of a comb, and the channel structure is naturally formed by a gap between every two adjacent second support members; and when the first conveying mechanism and the second conveying mechanism are located at the docking position, as viewed from the top, the first support members and the second support members are arranged in a staggered manner.

Optionally, the first support member and/or the second support member further includes a conveying roller for allowing the first support structure and/or the second support structure to convey the battery in the horizontal direction.

Optionally, the second support structure further includes an adjustment member for adjusting the gap between the second support members in the second support structure such that the channel structure is adapted to first support structures of different specifications.

Optionally, the second conveying mechanism further includes a carrying device configured to support the second support structure and be movable relative to the first conveying mechanism such that the first conveying mechanism and the second conveying mechanism are located at the docking position.

Optionally, the carrying device includes a rail guided vehicle.

Optionally, the second conveying mechanism further includes a battery conveying device, and the second support structure is fixedly arranged at the end of the battery conveying device close to the first conveying mechanism.

Optionally, the first conveying mechanism further includes a lifting device which is arranged on the mechanism body, connected to the first support structure and configured to drive the first support structure to be lifted or lowered relative to the mechanism body.

A second aspect of the disclosure provides a battery swapping station, including: a battery swapping platform for performing a battery dismounting/mounting operation on a vehicle; a battery storage mechanism for storing a battery; and the battery conveying system as described above in the first aspect. The first conveying mechanism of the battery conveying system is dockable with the battery storage mechanism for allowing the battery to be conveyed between the battery storage mechanism and the first conveying mechanism, and the second conveying mechanism of the battery conveying system is dockable with the battery swapping platform for allowing the battery to be conveyed between the battery swapping platform and the second conveying mechanism.

Optionally, the battery storage mechanism includes a plurality of battery compartments arranged in a stacked manner; and the first support structure of the first conveying mechanism is dockable with one of the battery compartments of the battery storage mechanism when being lifted or lowered relative to the mechanism body in a vertical direction.

Optionally, the battery storage mechanism includes two battery storage racks, each of the battery storage racks including a plurality of the battery compartments arranged in a stacked manner, and the first conveying mechanism is provided between the two battery storage racks.

Optionally, the battery storage mechanism includes a plurality of battery storage racks arranged side-by-side on one side of the first conveying mechanism, the first conveying mechanism being movable in a horizontal direction of the battery storage racks so as to be docked with one of the plurality of battery storage racks.

Optionally, the battery storage rack is arranged on a side portion of the first conveying mechanism in a first axial direction, and the second conveying mechanism is arranged on a side portion of the first conveying mechanism in a second axial direction perpendicular to the first axial direction.

Optionally, the battery swapping station further includes charging devices which are respectively arranged in the battery compartments and are configured to be electrically connected to batteries stored in the battery compartments for charging.

A third aspect of the disclosure provides a battery swapping method applied to the battery swapping station as described above in the second aspect, the method including: conveying a used battery detached from a vehicle from the battery swapping platform to the second conveying mechanism; controlling the second conveying mechanism to be docked with the first conveying mechanism, and causing the support surface of the first support structure of the first conveying mechanism to be lower than the support surface of the second support structure in the horizontal direction; controlling the first support structure to be lifted relative to the mechanism body such that the support surface of the first support structure is lifted from a position lower than the support surface of the second support structure to a position higher than the support surface of the second support structure, so as to transfer the used battery supported on the support surface of the second support structure to the support surface of the first support structure; controlling the first support structure to be lifted or lowered relative to the mechanism body such that the first support structure is docked with an empty battery compartment in the battery storage mechanism, and conveying the used battery from the first support structure to the battery compartment for storage; controlling the first support structure to be lifted or lowered relative to the mechanism body such that the first support structure is docked with a battery compartment in the battery storage mechanism that stores a fully-charged battery, and conveying the fully-charged battery from the battery compartment to the first support structure; controlling the first support structure to be lowered relative to the mechanism body such that the support surface of the first support structure is lowered from a position higher than the support surface of the second support structure to a position lower than the support surface of the second support structure, so as to transfer the fully-charged battery supported on the support surface of the first support structure to the support surface of the second support structure; and controlling the second conveying mechanism to convey the fully-charged battery to the battery swapping platform and mounting the fully-charged battery to the vehicle.

It can be seen from the above-mentioned technical solutions that, in the battery conveying system, the battery swapping station and the battery swapping method provided by the embodiments of the disclosure, with the provision of the first conveying mechanism having the first support structure and the second conveying mechanism having the second support structure and the channel structure, when the first conveying mechanism and the second conveying mechanism are located at the docking position, the first support structure can run, when being lifted or lowered, through the channel structure of the second conveying mechanism, such that the support surface of the first support structure is higher or lower than the support surface of the second support structure in the horizontal direction, thereby transferring the battery between the first support structure and the second support structure. With the above-mentioned structural design, the disclosure can reduce or eliminate a battery transportation area between the first conveying mechanism and the second conveying mechanism, not only shortening a battery transfer path in the battery swapping station, but also effectively reducing the overall footprint of the battery swapping station.

### Brief Description of the Drawings

To illustrate the technical solutions in embodiments of the disclosure or in the prior art more clearly, a brief introduction to the drawings required for the embodiments or the prior art will be provided below. Obviously, the drawings in the following description are merely some of the embodiments of the disclosure, and those of ordinary skills in the art would also obtain other drawings according to these drawings.
Fig. 1 is a schematic diagram of an overall structure of a conventional battery swapping station;
Figs. 2A to 2C are schematic diagrams of an overall structure of a battery conveying system of the disclosure;
Fig. 3 is a schematic structural diagram of a first conveying mechanism of the battery conveying system of the disclosure;
Fig. 4 is a schematic structural diagram of a second conveying mechanism of the battery conveying system of the disclosure;
Figs. 5A and 5B are schematic diagrams of an exemplary structure of the second conveying mechanism of the disclosure;
Figs. 6A and 6B are schematic diagrams of another exemplary structure of the second conveying mechanism of the disclosure;
Fig. 7 is a schematic diagram of an overall structure of a battery swapping station of the disclosure; and

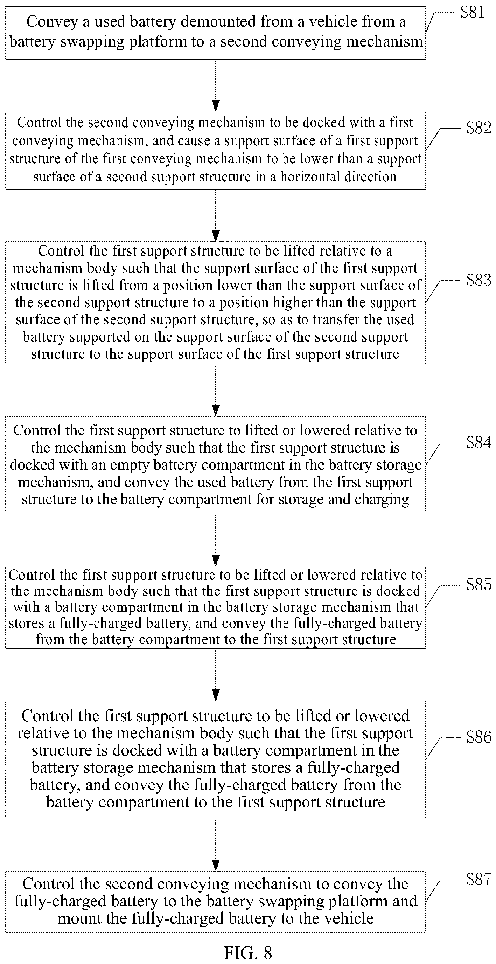

Fig. 8 is a schematic flowchart of a battery swapping method of the disclosure.

### Reference signs of elements:

1: Battery swapping station (prior art);
11: Battery swapping platform;
12: Rail guided vehicle (RGV);
13: Battery storage mechanism;
2: Battery conveying system;
21: First conveying mechanism;
211: Mechanism body;
212: First support structure;
212a: Support surface (of the first support structure)
2121: First support member;
213: Lifting device;
22: Second conveying mechanism;
221: Second support structure;
221 a: Support surface (of the second support structure)
2210: Channel structure;
2211: Second support member;
222: Carrying device;
223: Battery conveying device;
4: Battery swapping platform;
5: Battery storage mechanism;
5A, 5B: Battery storage rack;
51: Battery compartment;
6: Battery;
7: Rest room;
8: Control room.

### Detailed Description of Embodiments

To enable those skilled in the art to better understand the technical solutions in the embodiments of the disclosure, the technical solutions in the embodiments of the disclosure will be clearly and completely described below in conjunction with the accompanying drawings in the embodiments of the disclosure. Obviously, the described embodiments are merely some, rather than all, of the embodiments of the disclosure. Based on the embodiments of the disclosure, all other embodiments obtained by those of ordinary skill in the art shall fall within the scope of protection of the embodiments of the disclosure.

The specific implementation of the embodiments of the disclosure will be further described below with reference to the accompanying drawings in the embodiments of the disclosure.

### First embodiment

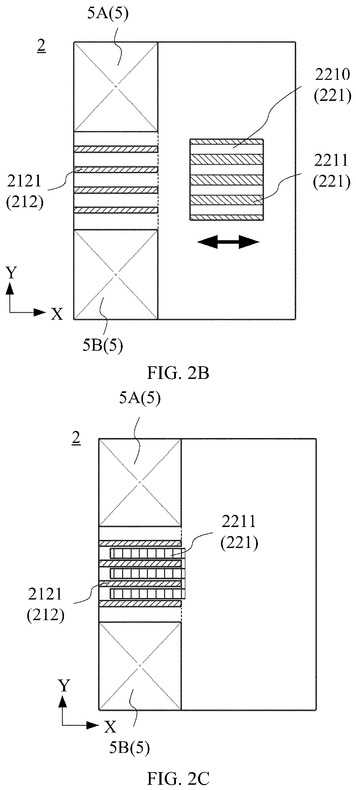

The first embodiment of the disclosure provides a battery conveying system. As shown in Figs. 2A and 2B, the battery conveying system 2 of the disclosure mainly includes a first conveying mechanism 21 and a second conveying mechanism 22.

The first conveying mechanism 21 mainly includes a mechanism body 211 and a first support structure 212.

The first support structure 212 is movably arranged on the mechanism body 211 and can be lifted or lowered relative to the mechanism body 211, and the first support structure 212 is configured to support a battery.

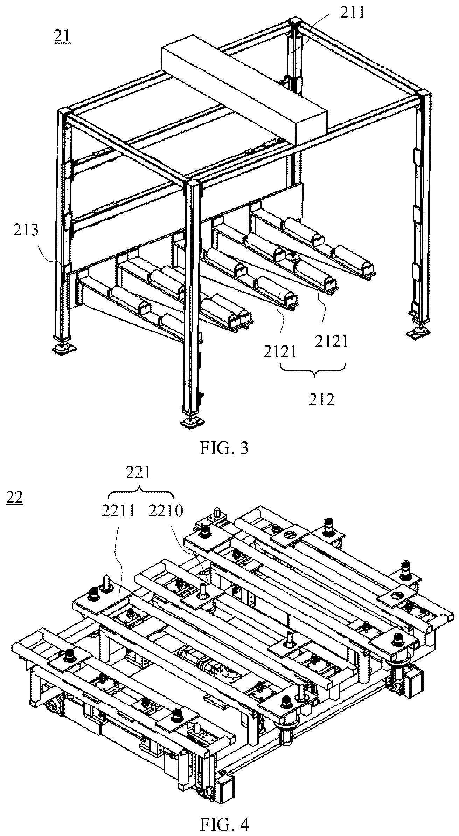

As shown in Fig. 3, in this embodiment, the first conveying mechanism 21 further includes a lifting device 213 which is arranged on the mechanism body 211, connected to the first support structure 212 and configured to drive the first support structure 212 to be lifted or lowered relative to the mechanism body 211.

Optionally, the mechanism body 211 is a frame structure.

Optionally, the first support structure 212 includes a plurality of first support members 2121 arranged in the shape of a comb.

Optionally, the lifting device 213 may include a lifting chain and a driving motor. The lifting chain is connected to the first support structure 212 and drives the first support structure 212 to be lifted or lowered relative to the mechanism body 211 by means of a driving force provided by the driving motor. However, the structural arrangement of the lifting device 213 is not limited to the above embodiment, and may also be adjusted according to actual requirements, which is not limited in the disclosure.

As shown in Fig. 4, the second conveying mechanism 22 includes a second support structure 221 and a channel structure 2210.

The second support structure 221 is configured to support the battery.

Optionally, the second support structure 221 includes a plurality of second support members 2211 arranged in the shape of a comb.

The channel structure 2210 is formed in the second support structure 221.

In this embodiment, the channel structure 2210 is naturally formed by a gap between every two adjacent second support members 2211.

In this embodiment, the second conveying mechanism 22 and the first conveying mechanism 21 may be located at a docking position for allowing the battery to be transported between the first conveying mechanism 21 and the second conveying mechanism 22.

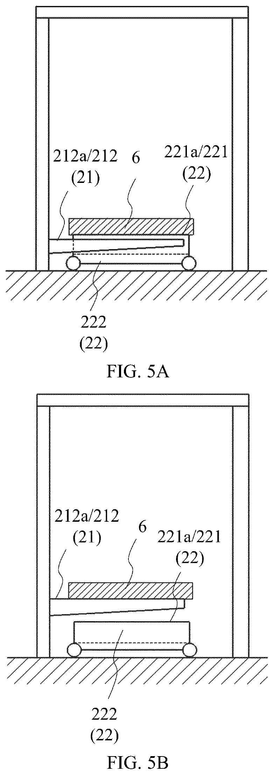

In an embodiment, the second conveying mechanism 22 may include a carrying device 222 (as shown in Figs. 5A and 5B) that is configured to support the second support structure 221 and can move relative to the first conveying mechanism 21 such that the first conveying mechanism 21 and the second conveying mechanism 22 are located at the docking position.

Specifically, the carrying device 222 is, for example, a rail guided vehicle (RGV), but is not limited thereto. The carrying device 222 may also be implemented using other apparatuses having a moving function, which is not limited in the disclosure.

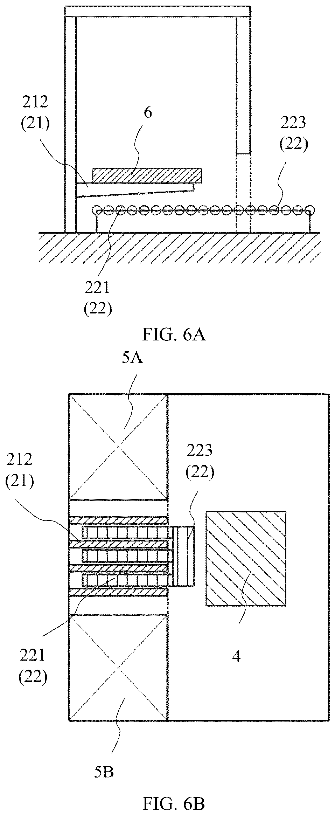

In another embodiment, the second conveying mechanism 22 may further include a battery conveying device 223 (as shown in Figs. 6A and 6B). The second support structure 221 is fixedly arranged at the end of the battery conveying device 223 close to the first conveying mechanism 21 and is kept in a docking position relationship with the first support structure 212.

Optionally, the second support structure 221 and the battery conveying device 223 may be implemented using an integrally formed structural design or may be implemented in a fixed connection manner.

Specifically, when the first conveying mechanism 21 and the second conveying mechanism 22 are located at the docking position, the first support structure 212 is perpendicularly aligned with the channel structure 2210 to enable, when the first support structure 212 is being lifted or lowered relative to the mechanism body 211, the first support structure 212 to run through the channel structure 2210, such that a support surface of the first support structure 212 is higher or lower than a support surface of the second support structure 221 in a horizontal direction, so as to allow the battery to be transported between the first support structure 212 and the second support structure 221.

As shown in Figs. 5A and 5B, in this embodiment, the battery 6 may be supported on the support surface 212a of the first support structure 212 or the support surface 221a of the second support structure 221. When the support surface 212a of the first support structure 212 is being lifted from a position lower than the support surface 221a of the second support structure 221 to a position higher than the support surface 221a of the second support structure 221 (i.e., when it is switched from the state shown in Fig. 5A into the state shown in Fig. 5B), the battery 6 supported on the support surface 221a of the second support structure 221 can be transferred to the support surface 212a of the first support structure 212. Conversely, when the support surface 212a of the first support structure 212 is being lowered from a position higher than the support surface 221a of the second support structure 221 to a position lower than the support surface 221a of the second support structure 221 (i.e., when it is switched from the state shown in Fig. 5B into the state shown in Fig. 5A), the battery supported on the support surface 212a of the first support structure 212 can be transferred to the support surface 221a of the second support structure 221. Therefore, the battery 6 is transported between the first support structure 212 and the second support structure 221.

As described above, in the embodiment of the disclosure, the first support structure 212 and the second support structure 221 are respectively composed of a plurality of first support members 2121 and a plurality of second support members 2211 arranged in the shape of a comb. Therefore, it can be clearly seen from Figs. 2B and 2C that when the first conveying mechanism 21 and the second conveying mechanism 22 are located at the docking position, as viewed from the top, the first support members 2121 and the second support members 2211 are arranged in a staggered manner (i.e., in the state shown in Fig. 2C). That is to say, with the structural design of the disclosure, an operating space required for transporting the battery between the first conveying mechanism 21 and the second conveying mechanism 22 is reduced, and the overall footprint of the battery conveying system 2 is reduced.

Preferably, the second support structure 221 may further include an adjustment member (not shown) that may be configured to adjust a gap between the second support members 2211 in the second support structure 221, such that the channel structure 2210 formed by the gap between every two adjacent second support members 2211 is adapted to the first support structure 212. That is to say, the first support members 2121 in the first support structure 212 are respectively aligned with the gap in the channel structure 2212 in terms of position when the first conveying mechanism 21 and the second conveying mechanism 22 are located at the docking position.

By virtue of the design mechanism of the adjustment member, it is possible to provide the channel structure 2210 of the second conveying mechanism 22 adapted to first support structures 212 of different specifications, so that the range of application of the second conveying mechanism 22 can be expanded.

In another embodiment, the first support member 2121 of the first support structure 212 and/or the second support member 2211 of the second support structure 221 further includes a conveying roller for enabling the first support structure 212 and/or the second support structure 221 to convey the battery in the horizontal direction, for example, to enable the conveying of the battery between the first conveying mechanism 21 and the second conveying mechanism 22 and other apparatuses or mechanisms.

### Second embodiment

The second embodiment of the disclosure provides a battery swapping station.

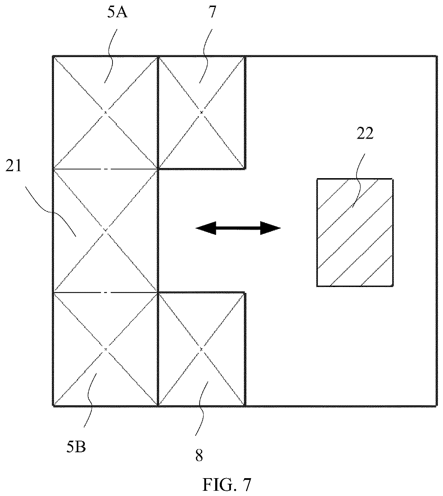

As shown in Fig. 7, the battery swapping station of the disclosure mainly includes a battery swapping platform, battery storage mechanisms and a battery conveying system according to the first embodiment described above.

The battery swapping platform (not shown) is configured to perform a battery dismounting/mounting operation on the vehicle, i.e., to dismount a used battery from the vehicle or mount a fully-charged battery to the vehicle.

The battery storage mechanisms 5A and 5B are configured to store batteries.

The battery conveying system includes a first conveying mechanism 21 and a second conveying mechanism 22 that are configured to convey batteries between the battery swapping platform and the battery storage mechanisms 5A, 5B.

Referring to Figs. 2A to 2C and Fig. 7, the first conveying mechanism 21 of the battery conveying system 2 may be docked with the battery storage mechanisms 5A, 5B for allowing batteries to be transported and conveyed between the battery storage mechanisms 5A, 5B and the first conveying mechanism 21, and the second conveying mechanism 22 of the battery conveying system 2 may be docked with the battery swapping platform for allowing a battery to be transported and conveyed between the battery swapping platform and the second conveying mechanism 22.

In this embodiment, the first support structure 212 in the first conveying mechanism 21 may include a plurality of first support members 2121 arranged in the shape of a comb. Each first support member 2121 is composed, for example, of a conveying roller, for allowing a battery to be conveyed in the horizontal direction between the first support structure 212 and the battery storage mechanism 5 after the first support structure 212 is docked with the battery storage mechanism 5.

Specifically, the battery storage mechanisms 5A, 5B each include a plurality of battery compartments 51 arranged in a stacked manner. The first support structure 212 of the first conveying mechanism 21 may be docked, when being lifted or lowered relative to the mechanism body 211 under the drive of the lifting device 213, with a designated battery compartment 51 in the battery storage mechanisms 5A, 5B for allowing a battery to be conveyed between the first support structure 212 and the designated battery compartment 51.

In this embodiment, the second support structure 221 of the second conveying mechanism 22 may further include a plurality of second support members 2211 arranged in the shape of a comb, each second support member 2211 being composed, for example, of a conveying roller, for allowing a battery to be conveyed in the horizontal direction between the second support structure 221 and the battery swapping platform after the second support structure 221 is docked with the battery swapping platform.

As shown in Figs. 5A and 5B, in an embodiment, the second conveying mechanism 22 may include a carrying device 222. The carrying device 222 may move along a preset traveling track between the first conveying mechanism 21 and the battery swapping platform to allow for the mutual docking of the second conveying mechanism 22 and the first conveying mechanism 21, thereby transporting and transferring a battery between the first support structure 212 and the second support structure 221, or to allow for the mutual docking of the second conveying mechanism 22 and a battery dismounting/mounting structure (not shown) of the battery swapping platform, thereby transporting and conveying a battery between the second support structure 221 and the battery dismounting/mounting structure.

Optionally, it is also possible to design the second conveying mechanism 22 to be integrated with the battery dismounting/mounting mechanism of the battery swapping platform, such that the battery dismounting/mounting mechanism is responsible for conveying the battery between the battery swapping platform and the first conveying mechanism 21 in addition to performing the battery dismounting/mounting operation on the vehicle. The second conveying mechanism 22 is, for example, a rail guided vehicle including the second support structure 221.

As shown in Figs. 6A and 6B, in another embodiment, the second conveying mechanism 22 may further include a battery conveying device 223, the second support structure 221 may be fixedly arranged at the end of the battery conveying device 223 close to the first conveying mechanism 21, and the end of the battery conveying device 223 away from the first conveying mechanism 21 may be mutually docked with the battery dismounting/mounting mechanism (not shown) of the battery swapping platform 4, thereby allowing the battery to be conveyed between the second support structure 221 and the battery dismounting/mounting mechanism of the battery swapping platform 4 by means of the battery conveying device 223.

The battery conveying device 223 is, for example, a conveying mechanism such as a roller conveying line, a chain conveying line, a belt conveying line, etc., which is not limited in the disclosure.

In other embodiments, it is also possible that no battery conveying device 223 is provided, and only the second support structure 221 is configured to dock with the first conveying mechanism 21 and the battery dismounting/mounting mechanism of the battery swapping platform 4 respectively.

As shown in Fig. 2A, in an embodiment of the disclosure, the battery storage mechanism 5 may include two battery storage racks 5A, 5B. The battery storage racks 5A, 5B each includes a plurality of battery compartments 51 arranged in a stacked manner. The first conveying mechanism 21 may be arranged between the two battery storage racks 5A, 5B to enable the first support structure 212 of the first conveying mechanism 21, when being lifted or lowered relative to the mechanism body 211 in a vertical direction under the drive of the lifting device 213, to be mutually docked with a designated battery compartment 51 in the battery storage rack 5A or 5B, thereby performing a battery conveying operation between the battery compartment 51 and the first support structure 212.

In another embodiment of the disclosure, the battery storage mechanism 5 may further include a plurality of battery storage racks 5A, 5B arranged side-by-side on one side of the first conveying mechanism 21. The first conveying mechanism 21 can move in a horizontal direction of the battery storage racks 5A, 5B so as to be docked with one of the plurality of battery storage racks 5A, 5B.

For example, a guide rail may be added below the first conveying mechanism 21 so that the first conveying mechanism 21 can move along the guide rail between the plurality of battery storage racks 5A, 5B arranged side-by-side, and the capacity of the battery compartment 51 is thus increased.

Referring to Figs. 2B and 7, in this embodiment, the battery storage racks 5A, 5B are arranged on one side or two opposite sides of the first conveying mechanism 21 in a first axial direction (i.e., the Y-axis direction shown in Fig. 2B), and the second conveying mechanism 22 is arranged on one side of the first conveying mechanism 21 in a second axial direction perpendicular to the first axial direction (i.e., the X-axis direction shown in Fig. 2B). With such a design mechanism, the overall layout of the battery swapping station can be more compact, and the overall footprint of the battery swapping station is accordingly decreased.

In another embodiment, the battery swapping station may further include charging devices (not shown) which are respectively arranged in the battery compartments 51 and are configured to be electrically connected to batteries stored in the battery compartments 51 for charging.

As shown in Fig. 7, in other embodiments, the battery swapping station may further include a rest room 7 and a control room 8. The control room 8 is responsible for respective operations of the battery conveying system, the battery swapping platform and the battery storage mechanisms 5A, 5B, and is further responsible for cooperative operations between the battery conveying system and the battery swapping platform and the battery storage mechanisms 5A, 5B. Specifically, the control room 8 may be configured to provide an equipment room, an electrical cabinet, a cooling device, a power distribution cabinet, etc. and be responsible for the logical control of movements of constituent components in the entire battery swapping station, such as dismounting/mounting, transfer and conveying, and charging and cooling operations of batteries, etc. The rest room 8 is configured to provide a rest area for an operator of the battery swapping station and/or a vehicle owner (user).

### Third embodiment

The third embodiment of the disclosure provides a battery swapping method applied to the battery swapping station as described above in the second aspect, the method including the following steps.

In step S81, a used battery detached from a vehicle is conveyed from the battery swapping platform to the second conveying mechanism.

Specifically, the vehicle may be driven into and positioned on the battery swapping platform, such that the used battery is dismounted from the vehicle by means of the battery dismounting/mounting mechanism of the battery swapping platform, and the used battery dismounted is conveyed from the battery swapping platform to the second support structure of the second conveying mechanism.

In step S82, the second conveying mechanism is controlled to be docked with the first conveying mechanism, and the support surface of the first support structure of the first conveying mechanism is caused to be lower than the support surface of the second support structure in the horizontal direction.

In an embodiment, when the second support structure of the second conveying mechanism is support on the carrying device (i.e., the embodiment shown in Figs. 5A and 5B), the carrying device may support the used battery and move same from the battery swapping platform toward the first conveying mechanism when it is determined that the support surface of the first support structure of the first conveying mechanism is lower than the support surface of the second support structure in the horizontal direction, such that the second conveying mechanism and the first conveying mechanism are located at a docking position.

It should also be noted that, in another embodiment, when the second support structure of the second conveying mechanism is fixedly arranged at the end of the battery conveying device close to the first conveying mechanism (i.e., the embodiment shown in Figs. 6A and 6B), if the second conveying mechanism and the first conveying mechanism are in a default docking state, no docking operation is needed, and the battery conveying device can directly convey the used battery from the battery swapping platform to the second support structure when it is determined that the support surface of the first support structure of the first conveying mechanism is lower than the support surface of the second support structure in the horizontal direction.

In step S83, the first support structure is controlled to be lifted relative to the mechanism body such that the support surface of the first support structure is lifted from a position lower than the support surface of the second support structure to a position higher than the support surface of the second support structure, so as to transfer the used battery supported on the support surface of the second support structure to the support surface of the first support structure (i.e., it is switched from the state shown in Fig. 5A to the state shown in Fig. 5B).

In step S84, the first conveying mechanism is controlled to lifted or lower relative to the mechanism body such that the first support structure is docked with an empty battery compartment in the battery storage mechanism, and the used battery is conveyed from the first support structure to the battery compartment for storage and charging.

In step S85, the first support structure is controlled to be lifted or lowered relative to the mechanism body such that the first support structure is docked with a battery compartment in the battery storage mechanism that stores a fully-charged battery, and the fully-charged battery is conveyed from the battery compartment to the first support structure.

In step S86, the first support structure is controlled to be lowered relative to the mechanism body such that the support surface of the first support structure is lowered from a position higher than the support surface of the second support structure to a position lower than the support surface of the second support structure, so as to transfer the fully-charged battery supported on the support surface of the first support structure to the support surface of the second support structure (i.e., it is switched from the state shown in Fig. 5B to the state shown in Fig. 5A).

In step S87, the second conveying mechanism is controlled to convey the fully-charged battery to the battery swapping platform, and the fully-charged battery is mounted to the vehicle.

In summary, in the battery conveying system, the battery swapping station and the battery swapping method provided in the embodiments of the disclosure, with the provision of the second conveying mechanism having the channel structure, the first support structure of the first conveying mechanism can run through the channel structure of the second conveying mechanism during lifting or lowering, such that the support surface of the first support structure is higher or lower than the support surface of the second support structure in the horizontal direction, thereby allowing battery to be transferred between the first support structure and the second support structure. With this design mechanism, when the first conveying mechanism and the second conveying mechanism are located at the docking position, as viewed from the top, the first support structure of the first conveying mechanism and the second support structure of the second conveying mechanism are arranged in a staggered manner. Therefore, the disclosure can greatly reduce or eliminate the transportation area between the first conveying mechanism and the second conveying mechanism and accordingly decreases the overall footprint of the battery swapping station, which not only facilitates site selection for equipment in the battery swapping station, but also reduces the overall cost of the equipment.

Furthermore, since the disclosure greatly reduces or eliminates the transportation position between the first conveying mechanism and the second conveying mechanism, the distance between the battery swapping platform and the battery storage mechanism in the battery swapping station can be relatively shortened, the transfer path of the battery therebetween is shortened, and the efficiency of battery transportation and transfer is improved.

Finally, it should be noted that the foregoing embodiments are merely used for illustrating rather than limiting the technical solutions of the embodiments of the disclosure. Although the disclosure has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the disclosure.

## Claims

1. A battery conveying system, comprising:
a first conveying mechanism, comprising:
a mechanism body; and
a first support structure movably arranged on the mechanism body and liftable relative to the mechanism body, the first support structure being configured to support a battery; and
a second conveying mechanism, comprising:
a second support structure configured to support the battery; and
a channel structure formed on the second support structure,
wherein when the first conveying mechanism and the second conveying mechanism are located at a docking position, the first support structure is perpendicularly aligned with the channel structure to enable, when the first support structure is being lifted or lowered relative to the mechanism body, the first support structure to run through the channel structure, such that a support surface of the first support structure is higher or lower than a support surface of the second support structure in a horizontal direction, so as to allow the battery to be transported and conveyed between the first support structure and the second support structure.

2. The battery conveying system according to claim 1, wherein
the battery is supported on the support surface of the first support structure or the support surface of the second support structure, and wherein
the battery supported on the support surface of the second support structure is transferable to the support surface of the first support structure when the support surface of the first support structure is being lifted from a position lower than the support surface of the second support structure to a position higher than the support surface of the second support structure; and
the battery supported on the support surface of the first support structure is transferable to the support surface of the second support structure when the support surface of the first support structure is being lowered from a position higher than the support surface of the second support structure to a position lower than the support surface of the second support structure.

3. The battery conveying system according to claim 1, wherein the first support structure comprises a plurality of first support members arranged in the shape of a comb, the second support structure comprises a plurality of second support members arranged in the shape of a comb, and the channel structure is naturally formed by a gap between every two adjacent second support members; and
when the first conveying mechanism and the second conveying mechanism are located at the docking position, as viewed from the top, the first support members and the second support members are arranged in a staggered manner.

4. The battery conveying system according to claim 3, wherein the first support member and/or the second support member further comprises a conveying roller for allowing the first support structure and/or the second support structure to convey the battery in the horizontal direction.

5. The battery conveying system according to claim 3, wherein the second support structure further comprises an adjustment member for adjusting the gap between the second support members in the second support structure such that the channel structure is adapted to first support structures of different specifications.

6. The battery conveying system according to claim 1, wherein the second conveying mechanism further comprises a carrying device configured to support the second support structure and be movable relative to the first conveying mechanism such that the first conveying mechanism and the second conveying mechanism are located at the docking position.

7. The battery conveying system according to claim 6, wherein the carrying device comprises a rail guided vehicle.

8. The battery conveying system according to claim 1, wherein the second conveying mechanism further comprises a battery conveying device, and the second support structure is connected to the end of the battery conveying device close to the first conveying mechanism.

9. The battery conveying system according to claim 1, wherein the first conveying mechanism further comprises a lifting device which is arranged on the mechanism body, connected to the first support structure and configured to drive the first support structure to be lifted or lowered relative to the mechanism body.

10. A battery swapping station, comprising:
a battery swapping platform for performing a battery dismounting/mounting operation on a vehicle;
a battery storage mechanism for storing a battery; and
the battery conveying system according to any one of claims 1 to 9, wherein
the first conveying mechanism of the battery conveying system is dockable with the battery storage mechanism for allowing the battery to be conveyed between the battery storage mechanism and the first conveying mechanism, and the second conveying mechanism of the battery conveying system is dockable with the battery swapping platform for allowing the battery to be conveyed between the battery swapping platform and the second conveying mechanism.
